# EUROPÄISCHE PATENTSCHRIFT

(11) **EP 0 740 618 B1**
(45) Veröffentlichungstag und Bekanntmachung des Hinweises auf die Patenterteilung: **03.09.1997**
(21) Anmeldenummer: 95905480.0
(22) Anmeldetag: 19.01.1995
(51) Int. Cl.: B60M 1/12, B66D 1/20, B61D 15/12

(54) **ANTRIEBS- UND BREMSVORRICHTUNG FÜR VON EINER TROMMEL ABLAUFENDE SEILE UND/ODER DRÄHTE**
DRIVING AND BRAKING DEVICE FOR CABLES AND/OR WIRES UNWOUND FROM A DRUM
DISPOSITIF D'ENTRAINEMENT ET DE FREINAGE DE CABLES ET/OU FILS METALLIQUES DEVIDES D'UN TAMBOUR

(30) Priorität: 21.01.1994 AT 114/94
(43) Veröffentlichungstag der Anmeldung: 06.11.1996
(73) Patentinhaber: ELIN ENERGIEVERSORGUNG GESELLSCHAFT m.b.H., 1141 Wien (AT)
(72) Erfinder: PACH, Karl, A-1210 Wien (AT)
(74) Vertreter: Krause, Peter
(86) Internationale Anmeldenummer: AT9500011
(87) Internationale Veröffentlichungsnummer: WO9519894

(56) Entgegenhaltungen:
- DE-A- 3 905 345
- US-A- 3 520 489
- US-A- 4 213 596

## Beschreibung

Die Erfindung betrifft eine Antriebs- und Bremsvorrichtung für von einer Trommel ablaufende Seile und/oder Drähte, oder dergleichen.

Aus der DE-OS 21 22 099 ist eine Vorrichtung zum Verlegen von ummanteltem Fahrdraht bekannt. Diese Vorrichtung weist unter anderem einen Trommeltransportwagen mit einer Leitertrommel auf, bei der eine Backenbremse vorgesehen ist. Nachteilig ist, daß aufgrund der vielen Fahrzeugeinheiten für die Verlegung ein erheblicher Personal- und Arbeitsaufwand erforderlich ist. Außerdem leidet durch die Labilität der Einheit die Kontinuität und die Qualität der verlegten Leitung.

Weiters ist noch in der DD-PS 128 887 ein Verfahren zur Montage oder Demontage von Fahrleitungen für Schienenbahnen beschrieben. Dabei wird die Drahttrommel angetrieben und der Draht über einen Umlenkmechanismus geführt. Nachteilig dabei ist, daß der unter Zugspannung stehende Draht einer oder mehrerer Richtungsänderungen ausgesetzt ist.

Die Aufgabe der Erfindung besteht nun darin, eine neuartige Vorrichtung zum Antreiben und Bremsen einer Seiltrommel zu schaffen, die vor allem relativ einfach mit der Seiltrommel in Verbindung gebracht werden kann.

Die Aufgabe wird durch die Erfindung gelöst. Diese ist dadurch gekennzeichnet, daß an einem, vorzugsweise hohlen, Arm an einem Ende ein seitliches Querrohr befestigt ist, das in einem Lager geführt ist, welches in einem Grundrahmen oder auf einer -platte befestigt ist, daß an der gegenüberliegenden Seite des Lagers am Querrohr ein Motor angeflanscht ist, der über einen vorzugsweise im Inneren des Armes angeordneten Kettentrieb oder dergleichen, eine im anderen Endbereich des Armes gelagerte waagrechte Welle antreibt, auf der beidseitig je eine Walze befestigt ist, und daß mindestens eine im Grundrahmen oder auf der -platte fixierte Hubkolbeneinrichtung am Arm befestigt ist die die Walzen gegen das Trommelgut preßt. Durch die erfindungsgemäße Vorrichtung können erstmals Seiltrommeln mit unterschiedlichen Durchmessern angetrieben bzw. gebremst werden. Dabei ist die Antriebs- und Bremsvorrichtung unter dem Trommelbock versenkt angeordnet und wird von unten an das Trommelgut angepreßt. Außerdem wird die Anpreßkraft der Walzen durch die Hubkolbeneinrichtung immer konstant gehalten, wodurch die Zugkraft am Trommelgut immer gleichmäßig ist. Ein weiterer Vorteil der Erfindung liegt darin, daß durch die Walzen ein Aufspringen des relativ steifen Trommelgutes verhindert wird, sodaß ein Überkreuzen und dadurch entstehende Verletzungen während des Abspulen des Trommelgutes vermieden werden.

Nach einer Ausgestaltung der Erfindung, besteht der Arm aus einem quadratischen oder hochkant angeordnetem Rechteckhohlprofil. Dadurch wird die Steifigkeit des Armes erhöht und weiters kann auch der Kettentrieb im Inneren des Armes geführt werden, wodurch eine Verletzungsgefahr des Bedienungspersonals vermieden wird.

Von Vorteil ist, daß auf der Oberseite des Armes im Mittelbereich eine beidseitig seitlich hinausragende Platte befestigt ist, und daß zwei Hubkolbeneinrichtungen einerseits an der Unterseite der Platte und andererseits im Grundrahmen oder auf der -platte bei waagrechter Position des Armes unterhalb der Walzen gelagert sind. Dies ist die optimale Möglichkeit um immer konstanten Druck über die Walzen auf das Trommelgut zu gewährleisten.

Nach einer weiteren Ausgestaltung der Erfindung ist zwischen den beiden Walzen am Arm ein Teil, der im Durchmesser geringfügig kleiner als die Walzen ist und einem Teil des Umfanges der Walzen entspricht, befestigt. Dieser Teil dient dazu, um über die gesamte Breite der Trommel ein Aufspringen zu vermeiden.

Von Vorteil ist, daß das Lager für das Querrohr ein Gleitlager ist. Aufgrund des geringen Durchmessers kann das Lager ebenfalls im Boden versenkt werden.

Nach einer Weiterbildung weist die Welle im Bereich der Walzen quadratischen oder rechteckigen Querschnitt auf. Dadurch wird eine Verdrehung der Walzen ausgeschlossen und außerdem ist bei einer lockeren Passung eine Verschiebung der Walzen in Längsrichtung möglich. Dies ist vor allem aufgrund der relativ großen Toleranzen der Trommeln von Vorteil.

Eine weitere Ausgestaltung der Erfindung liegt darin, daß das Material für die Walzen und den Teil zwischen den Walzen entweder Gummi oder ein weicher Kunststoff ist. Durch die Verwendung von Gummi oder Kunststoff wird einerseits ausgeschlossen, daß das Trommelgut bzw. deren Isolation beschädigt wird und andererseits wird zur Vermeidung eines Schlupfes ein ausreichender Reibungswiderstand bei geringstmöglicher Anpreßkraft der Hubkolbeneinrichtung aufgebracht. Darüber hinaus können die Walzenlängen an die inneren Trommelbreiten angepaßt werden.

Nach einer Ausgestaltung sind die Hubkolbeneinrichtungen pneumatisch betätigbar. Dadurch wird eine elastische und gleichbleibende Anpreßkraft an das Trommelgut erreicht. Weiters treten auch bei Unebenheiten am aufgewickelten Seil oder Draht keine zu größen Kraftunterschiede auf, da diese Hubkolbeneinrichtung besonders leicht nachfedert.

Eine weitere Ausgestaltung liegt darin, daß der Motor ein drehzahlregelbarer Elektromotor oder ein Hydraulikmotor ist. Durch die Verwendung einer dieser beiden Motoren ist gewährleistet, daß die Abrollgeschwindigkeit des Trommelgutes unabhängig vom jeweiligen Durchmesser immer konstant ist

Bei einer erfindungsgemäßen Anordnung der Antriebs- und Bremsvorrichtung sind mindestens zwei Grundrahmen oder - platten, auf denen auch die Haltevorrichtungen für die Trommeln befestigt sind, miteinander verbunden und in einen schienengebundenen Waggon eingebaut.

Eine weitere Ausgestaltung der Anordnung der Antriebs- und Bremsvorrichtung besteht darin, daß die Grundrahmen oder Platten für verschiedene Trommeldurchmesser ausgelegt sind.

Die Erfindung wird nun an Hand der Zeichnungen noch näher erläutert.

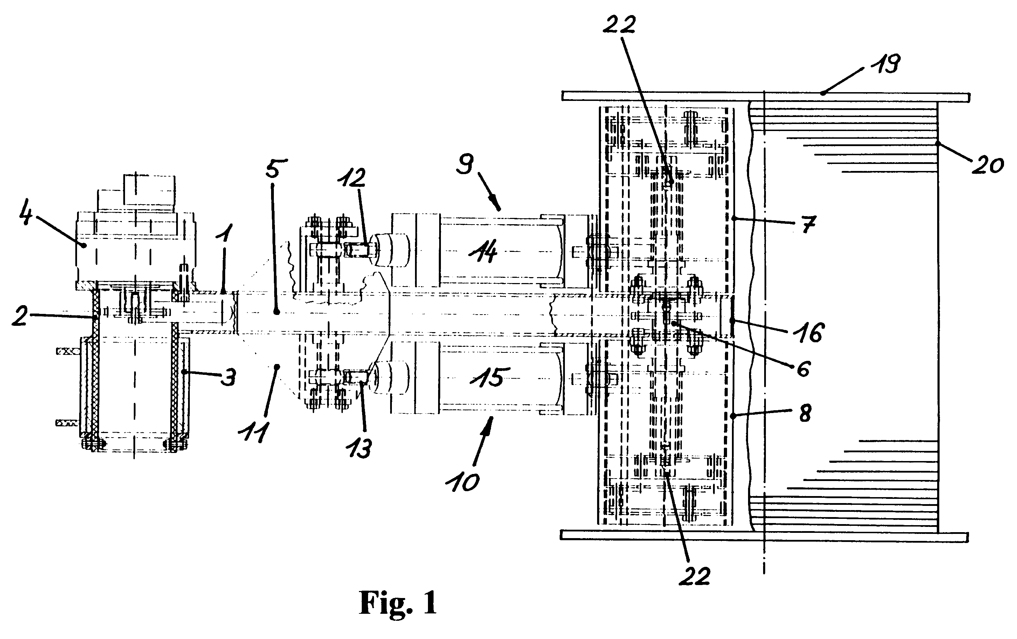

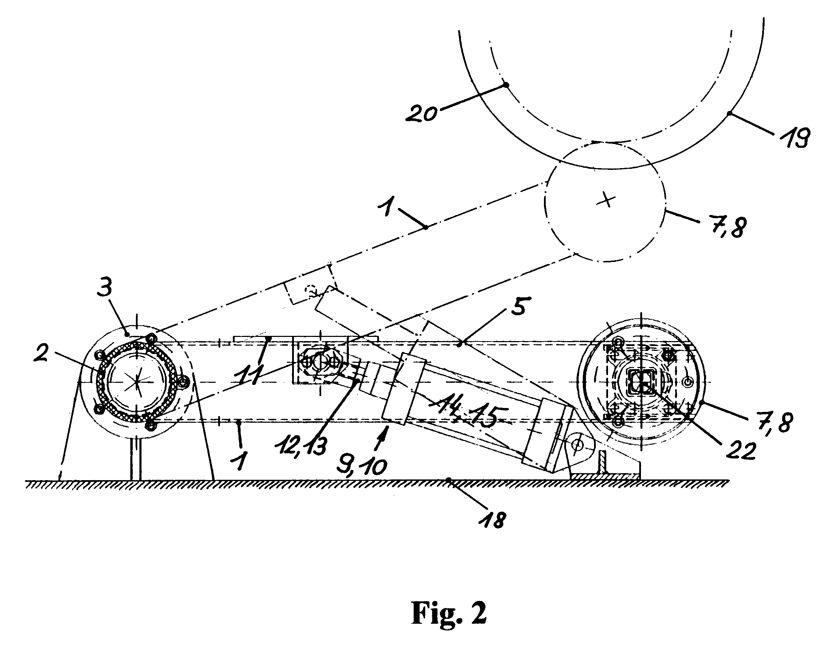

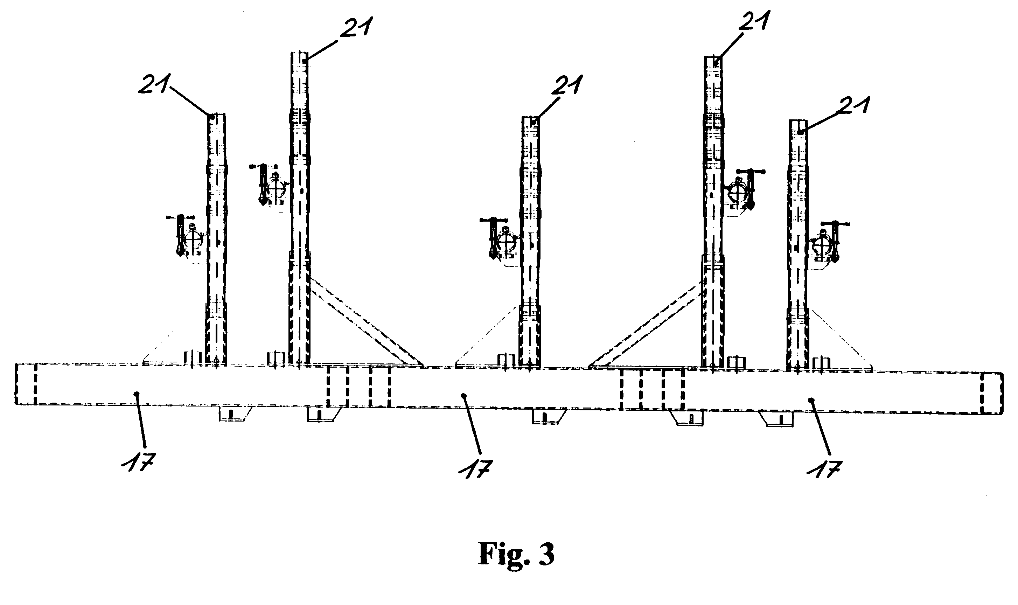

Die Fig. 1 zeigt eine Draufsicht und die Fig. 2 eine Seitenansicht der erfindungsgemäßen Antriebs- und Bremsvorrichtung und in Fig 3 ist eine Kombination von mehreren Grundrahmen mit verschieden großen Lagerböcken für unterschiedliche Trommeldurchmesser dargestellt.

Bei Fig. 1 und ebenso auch bei Fig. 2 ist an einem Ende eines hohlen Armes 1 ein seitliches Querrohr 2 befestigt, das in einem Lager 3 geführt ist, welches in einem Grundrahmen 17 oder auf einer -platte 18 befestigt ist. An dem Arm 1 naheliegenden Seite des Querrohres 2 ist ein Hydraulikmotor 4 angeflanscht.

Dieser treibt über einen im Inneren des Armes 1 befindlichen vorgespannten Kettentrieb 5 oder Riementrieb, eine im anderen Endbereich des Armes 1 gelagerte waagrechte Welle 6 an. Auf dieser ist beidseitig je eine Walze 7, 8 befestigt. Weiters sind zwei im Grundrahmen 17 oder auf der -platte 18 fixierte Hubkolbeneinrichtungen 9, 10 beidseitig am Arm 1 befestigt, welche die Walzen 7, 8 gegen das auf die Trommel 19 aufgerollte Seil 20 oder den Draht 20 pressen.
Der Arm 1 besteht aus Festigkeitsgründen und zur Aufnahme des Kettentriebes 5 aus einem quadratischen oder hochkant angeordnetem Rechteckhohlprofil.
Die Befestigung der Kolbenstangen 12, 13 der Hubkolbeneinrichtungen 9, 10 erfolgt an der Unterseite einer auf der Oberseite des Armes 1 im Mittelbereich befestigten beidseitig seitlich hinausragenden Platte 11. Die Zylinder 14, 15 der Hubkolbeneinrichtungen 9, 10 sind im Grundrahmen 17 oder auf der -platte 18 des Armes 1 befestigt. Bei waagrechter Position des Armes 1 ist die Vorrichtung im Grundrahmen 17 versenkt. Um den Reibungsschluß mit der Seiltrommel 19 herzustellen wird der Arm 1 von den Hubkolbeneinrichtungen 9, 10 angehoben und die Walzen 9, 10 werden gegen das Wickelgut 20 (Seil oder Draht) gepreßt.

Zwischen den beiden Walzen 7, 8 am Arm 1 ist ein Teil 16, der einem Teil des Umfanges der Walzen 7, 8 entspricht, befestigt.
Als Lager 3 für den Querholm 2 ist ein Gleitlager vorgesehen, welches am Grundrahmen 17 oder auf der -platte 18 angeschraubt ist.
Das Material für die Walzen 7, 8 und den Teil 16 zwischen den Walzen 7, 8 ist am zweckmäßigsten aus Gummi oder weichem Kunststoff, wodurch eine Beschädigung der Seile 20 oder Drähte 20 mit Sicherheit ausgeschlossen werden kann. Weiters ist im Bereich der Walzen 7, 8 die Welle 6 quadratisch 22 oder rechteckig.

In Fig. 2 ist die erfindungsgemäße Vorrichtung einerseits in Ruhestellung und andererseits strichpunktiert in Arbeitsstellung, d.h. beim Antrieb einer Seiltrommel 19 dargestellt

Die Anordnung der Antriebs- und Bremsvorrichtungen in Fig. 3 besteht aus mehreren miteinander verbundenen Grundrahmen 17 oder -platten 18, auf denen auch die höhenverstellbaren Haltevorrichtungen 21 bzw. Lagerböcke 21 für die Trommeln 19 befestigt sind. Diese Grundrahmen 17 sind in einem schienengebundenen Waggon eingebaut, welcher zur Oberleitungsmontage vorgesehen ist.
Die Grundrahmen 17 oder -platten 18 können selbstverständlich auch für verschiedene Trommeldurchmesser ausgelegt werden.

## Patentansprüche

1. Antriebs- und Bremsvorrichtung für von einer Trommel ablaufende Seile und/oder Drähte, oder dergleichen, **dadurch gekennzeichnet**, daß an einem, vorzugsweise hohlen, Arm (1) an einem Ende ein seitliches Querrohr (2) befestigt ist, das in einem Lager (3) geführt ist, welches in einem Grundrahmen (17) oder auf einer -platte (18) befestigt ist, daR an der gegenüberliegenden Seite des Lagers (3) am Querrohr (2) ein Motor (4) angeflanscht ist, der über einen vorzugsweise im Inneren des Armes (1) angeordneten Kettentrieb (5) oder dergleichen, eine im anderen Endbereich des Armes (1) gelagerte waagrechte Welle (6) antreibt, auf der beidseitig je eine Walze (7, 8) befestigt ist, und daR mindestens eine im Grundrahmen (17) oder auf der -platte (18) fixierte Hubkolbeneinrichtung (9 bzw. 10) am Arm (1) befestigt ist die die Walzen (7, 8) gegen das Trommelgut preßt.

2. Antriebs- und Bremsvorrichtung nach Anspruch 1, **dadurch gekennzeichnet**, daß der Arm (1) aus einem quadratischen oder hochkant angeordnetem Rechteckhohlprofil besteht.

3. Antriebs- und Bremsvorrichtung nach Anspruch 1 oder 2, **dadurch gekennzeichnet**, daß auf der Oberseite des Armes (1) im Mittelbereich eine beidseitig seitlich hinausragende Platte (11) befestigt ist, und daß zwei Hubkolbeneinrichtungen (9, 10) einerseits an der Unterseite der Platte (11) und andererseits im Grundrahmen (17) oder auf der -platte (18) bei waagrechter Position des Armes (1) unterhalb der Walzen (7, 8) gelagert sind.

4. Antriebs- und Bremsvorrichtung nach einem der Ansprüche 1 bis 3, **dadurch gekennzeichnet**, daß zwischen den beiden Walzen (7, 8) am Arm (1) ein Teil (16), der im Durchmesser geringfügig kleiner als die Walzen (7, 8) ist und einem Teil des Umfanges der Walzen (7, 8) entspricht, befestigt ist.

5. Antriebs- und Bremsvorrichtung nach einem der Ansprüche 1 bis 4, **dadurch gekennzeichnet**, daß das Lager (3) für das Querrohr (2) ein Gleitlager ist.

6. Antriebs- und Bremsvorrichtung nach einem der Ansprüche 1 bis 5, **dadurch gekennzeichnet**, daß die Welle (6) im Bereich der Walzen (7, 8) quadratischen oder rechteckigen Querschnitt (22) aufweist.

7. Antriebs- und Bremsvorrichtung nach einem der Ansprüche 1 bis 6, **dadurch gekennzeichnet**, daß das Material für die Walzen (7, 8) und den Teil (16) zwischen den Walzen (7, 8) entweder Gummi oder ein weicher Kunststoff ist.

8. Antriebs- und Bremsvorrichtung nach einem der Ansprüche 1 bis 7, **dadurch gekennzeichnet**, daß die Hubkolbeneinrichtungen (9, 10) pneumatisch betätigbar sind.

9. Antriebs- und Bremsvorrichtung nach einem der Ansprüche 1 bis 8, **dadurch gekennzeichnet**, daß der Motor (4) ein drehzahlregelbarer Elektromotor oder ein Hydraulikmotor (4) ist.

10. Anordnung der Antriebs- und Bremsvorrichtung nach einem der Ansprüche 1 bis 9, **dadurch gekennzeichnet**, daß mindestens zwei Grundrahmen (17) oder -platten (18), auf denen auch die Haltevorrichtungen (21) für die Trommeln (19) befestigt sind, miteinander verbunden sind und in einen schienengebundenen Waggon eingebaut sind.

11. Anordnung der Antriebs- und Bremsvorrichtung nach einem der Ansprüche 1 bis 10, **dadurch gekennzeichnet**, daß die Grundrahmen (17) oder -platten (18) für verschiedene Trommeldurchmesser ausgelegt sind.

## Claims

1. A device for driving and braking cables and/or metal wires or the like, unwound from a drum, characterized in that, on a preferably hollow arm (1), there is provided at one end thereof a side transverse tube (2), guided in a bearing (3) which is fixed into a base frame (17) or onto a base plate (18), in that at the opposed side of said bearing (3), a motor (4) is arranged on said transverse tube (2) which drives, through a chain drive (5) or the like, preferably disposed inside said arm (1), an horizontal shaft which pivots in the other end area of said arm (1), on both sides of which is respectively fixed a cylinder (7, 8), and in that at least a movable piston device (9, respectively 10) installed on said base frame (17) or base plate (18), is fixed to said arm (1) and presses cylinders (7, 8) against a product located on said drum.

2. The device for driving and braking as recited in claim 1, characterized in that said arm (1) comprises an hollow, rectangular, square section.

3. The device for driving and braking as recited in claim 1 or 2, characterized in that, in the median area of upper face of arm (1) a plate (11) is fixed which is laterally protuding on both sides, and in that two movable piston devices (9, 10) are installed, on one hand on the lower face of plate (11) and on the other hand in base frame (17) or base plate (18), when arm (1) is horizontally disposed below both cylinders (7, 8).

4. The device for driving and braking as recited in one of claims 1-3, characterized in that between both cylinders (7, 8) a portion (16) is fixed on arm (1) which has a slightly lower diameter than that of both cylinders (7, 8) and which corresponds to a portion of both cylinders (7, 8) periphery.

5. The device for driving and braking as recited in one of claims 1-4, characterized in that said bearing (3) for use with said transverse tube (2) is a sliding bearing.

6. The device for driving and braking as recited in one of claims 1-5, characterized in that said shaft (6) shows, in both cylinders (7, 8) area, a square or rectangular transverse cross-section (22).

7. The device for driving and braking as recited in one of claims 1-6, characterized in that material of both cylinders (7, 8) and of portion (16) between both cylinders (7, 8) is made from either rubber or flexible synthetic material.

8. The device for driving and braking as recited in one of claims 1-7, characterized in that both movable piston devices (9-10) can be pneumatically actuated.

9. The device for driving and braking as recited in one of claims 1-8, characterized in that motor (4) is an electrical motor, the rotating speed of which can be regulated, or an hydraulic motor (4).

10. The device for driving and braking as recited in one of claims 1-9, characterized in that at least two base frames (17) or base plates (18), on which devices (21) for mainting drums (19) are also fixed, are connected together and integrated into a rail-bound wagon.

11. The device for driving and braking as recited in one of claims 1-10, characterized in that base frames (17) or base plates (18) are designed for drums having different diameters.

## Revendications

1. Dispositif d'entraînement et de freinage pour des câbles et/ou des fils métalliques ou analogues, défilant depuis un tambour, caractérisé en ce que, sur un bras (1), de préférence creux, est fixé à une extrémité un tube transversal (2) latéral guidé dans un palier (3) fixé dans un cadre de base (17) ou sur une plaque de base (18), en ce que sur le côté opposé du palier (3) est flasqué, sur le tube transversal (2), un moteur (4) qui entraîne, par l'intermédiaire d'une transmission à chaîne (5) ou analogue, disposée de préférence à l'intérieur du bras (1), un arbre (6) horizontal tourillonnant dans l'autre zone d'extrémité du bras (1), arbre sur les deux côtés duquel est respectivement fixé un cylindre (7, 8), et en ce qu'au moins un dispositif à piston mobile (9, respectivement 10), fixé sur le cadre de base (17) ou sur la plaque de base (18), est fixé sur le bras (1) et presse les cylindres (7, 8) contre le produit se trouvant sur le tambour.

2. Dispositif d'entraînement et de freinage selon la revendication 1, caractérisé en ce que le bras (1) est constitué d'un profilé creux rectangulaire, carré ou de chant.

3. Dispositif d'entraînement et de freinage selon la revendication 1 ou 2, caractérisé en ce que, sur la face supérieure du bras (1), est fixée dans la zone médiane une plaque (11) dépassant latéralement de part et d'autre, et en ce que deux dispositifs à piston mobile (9, 10) sont montés, d'une part, en face inférieure de la plaque (11) et, d'autre part, dans le cadre de base (17) ou sur la plaque de base (18), lorsque le bras (1) est dans la position horizontale au-dessous des cylindres (7, 8).

4. Dispositif d'entraînement et de freinage selon l'une des revendications 1 à 3, caractérisé en ce que, entre les deux cylindres (7, 8), est fixée, sur le bras (1), une partie (16) qui est d'un diamètre légèrement inférieur à celui des cylindres (7, 8) et qui correspond à une partie de la périphérie des cylindres (7, 8).

5. Dispositif d'entraînement et de freinage selon l'une des revendications 1 à 4, caractérisé en ce que le palier (3) destiné au tube transversal (2) est un palier à glissement.

6. Dispositif d'entraînement et de freinage selon l'une des revendications 1 à 5, caractérisé en ce que l'arbre (6) présente, dans la zone des cylindres (7, 8), une section transversale (22) carrée ou rectangulaire.

7. Dispositif d'entraînement et de freinage selon l'une des revendications 1 à 6, caractérisé en ce que le matériau des cylindres (7, 8) et de la partie (16) située entre les cylindres (7, 8) est, soit du caoutchouc, soit une matière synthétique souple.

8. Dispositif d'entraînement et de freinage selon l'une des revendications 1 à 7, caractérisé en ce que les dispositifs à piston mobile (9, 10) sont actionnables pneumatiquement.

9. Dispositif d'entraînement et de freinage selon l'une des revendications 1 à 8, caractérisé en ce que le moteur (4) est un moteur électrique à vitesse de rotation pouvant être régulé ou bien un moteur hydraulique (4).

10. Dispositif d'entraînement et de freinage selon l'une des revendications 1 à 9, caractérisé en ce qu'au moins deux cadres de base (17) ou plaques de base (18), sur lesquel(le)s également sont fixés les dispositifs de maintien (21) destinés aux tambours (19), sont relié(e)s ensemble et intégré(e)s dans un wagon lié à des rails.

11. Dispositif d'entraînement et de freinage selon l'une des revendications 1 à 10, caractérisé en ce que les cadres de base (17) ou les plaques de base (18) sont conçu(e)s pour différents diamètres de tambour.
